# EUROPÄISCHE PATENTSCHRIFT

(11) **EP 3 408 009 B1**
(45) Veröffentlichungstag und Bekanntmachung des Hinweises auf die Patenterteilung: **03.03.2021**
(21) Anmeldenummer: 17700410.8
(22) Anmeldetag: 13.01.2017
(51) Int. Cl.: B01D 46/00, B01D 46/24

(54) **GEHÄUSE, FLUIDAUSLASS-DICHTUNGSTEIL, GEHÄUSEDECKEL UND VERBINDUNGSTEIL EINER EINRICHTUNG ZUR ABSCHEIDUNG WENIGSTENS EINES FLUIDS AUS GAS UND EINRICHTUNG UND VORRICHTUNG ZUR ABSCHEIDUNG EINES FLUIDS**
HOUSING, FLUID OUTLET SEAL PART, HOUSING COVER, CONNECTION PART OF A DEVICE FOR SEPARATING AT LEAST ONE FLUID FROM GAS, AND DEVICE AND APPARATUS FOR SEPARATING A FLUID
BOÎTIER, ÉLÉMENT D'ÉTANCHÉITÉ POUR ORIFICE DE SORTIE DE FLUIDE, COUVERCLE DE BOÎTIER ET ÉLÉMENT DE LIAISON D'UN DISPOSITIF CONÇU POUR SÉPARER AU MOINS UN FLUIDE D'UN GAZ ET DISPOSITIF POUR SÉPARER UN FLUIDE

(30) Priorität: 28.01.2016 DE 102016000857
(43) Veröffentlichungstag der Anmeldung: 05.12.2018
(73) Patentinhaber: Mann+Hummel GmbH, 71636 Ludwigsburg (DE)
(72) Erfinder: ZINIC, Daniela, 67373 Dudenhofen (DE); DWORATZEK, Klemens, 68535 Edingen (DE)
(74) Vertreter: Seyboth, Matthias
(86) Internationale Anmeldenummer: PCT/EP2017/050634
(87) Internationale Veröffentlichungsnummer: WO 2017/129417

(56) Entgegenhaltungen:
- EP-A1- 2 982 427
- DE-A1-102008 046 499
- DE-U1- 8 501 736

## Beschreibung

### Technisches Gebiet

Die Erfindung betrifft ein Gehäuse einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, mit wenigstens einem ersten Gasdurchlass, der bezüglich einer Achse zentral angeordnet ist, mit wenigstens einem zweiten Gasdurchlass, der bezüglich der Achse radial außerhalb des wenigstens einen ersten Gasdurchlasses angeordnet ist, und mit wenigstens einem Fluidauslass für von dem Gas abgeschiedenes Fluid, der bezüglich der Achse radial zwischen dem wenigstens einen ersten Gasdurchlass und dem wenigstens einen zweiten Gasdurchlass angeordnet ist, wobei fluidtechnisch zwischen dem wenigstens einen zweiten Gasdurchlass und dem wenigstens einen Fluidauslass wenigstens ein gehäuseseitiges Fluidauslass-Dichtungsteil wenigstens einer Fluidauslass-Dichteinrichtung angeordnet ist, das mit wenigstens einem entsprechenden verbindungsseitigen Fluidauslass-Dichtungsteil eines Verbindungsteils, das zur Verbindung des Gehäuses mit der Anschlusseinrichtung vorgesehen ist, dichtend zusammenwirken kann.

Beschrieben wird ferner ein Fluidauslass-Dichtungsteil einer Fluidauslass-Dichteinrichtung eines Gehäuses oder für ein Gehäuse einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, wobei das gehäuseseitige Fluidauslass-Dichtungsteil fluidtechnisch zwischen wenigstens einem Gasdurchlass und wenigstens einem Fluidauslass so angeordnet ist oder werden kann, das es mit wenigstens einem entsprechenden verbindungsseitigen Fluidauslass-Dichtungsteil eines Verbindungsteils, das zur Verbindung des Gehäuses mit einer Anschlusseinrichtung der Einrichtung vorgesehen ist, dichtend zusammenwirken kann.

Beschrieben wird außerdem einen Gehäusedeckel eines Gehäuses einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, mit wenigstens einem ersten Gasdurchlass, der bezüglich einer Achse zentral angeordnet ist, mit wenigstens einem zweiten Gasdurchlass, der bezüglich der Achse radial außerhalb des wenigstens einen ersten Gasdurchlasses angeordnet ist, und mit wenigstens einem Fluidauslass für von dem Gas abgeschiedenes Fluid, der bezüglich der Achse radial zwischen dem wenigstens einen ersten Gasdurchlass und dem wenigstens einen zweiten Gasdurchlass angeordnet ist, wobei zwischen dem wenigstens einen zweiten Gasdurchlass und dem wenigstens einen Fluidauslass wenigstens ein gehäuseseitiges Fluidauslass-Dichtungsteil wenigstens einer Fluidauslass-Dichteinrichtung angeordnet ist oder werden kann, das mit wenigstens einem entsprechenden verbindungsseitigen Fluidauslass-Dichtungsteil eines Verbindungsteils, das zur Verbindung des Gehäuses mit der Anschlusseinrichtung vorgesehen ist, dichtend zusammenwirken kann.

Beschrieben wird im Übrigen ein Verbindungsteil zum Verbinden einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, mit einer Anschlusseinrichtung, aufweisend wenigstens einen gasleitenden Raum für wenigstens einen ersten Gasdurchlass eines Gehäuses der Einrichtung.

Die Erfindung betrifft des Weiteren eine Einrichtung zur Abscheidung wenigstens eines Fluids, insbesondere Öl, aus Gas, insbesondere Luft, insbesondere eine Luftentölbox oder ein Luftentölelement, insbesondere eines Kompressors, einer Druckluftanlage oder einer Vakuumpumpe, mit einem Gehäuse mit wenigstens einem ersten Gasdurchlass, der bezüglich einer Achse zentral angeordnet ist, mit wenigstens einem zweiten Gasdurchlass, der bezüglich der Achse radial außerhalb des wenigstens einen ersten Gasdurchlasses angeordnet ist, und mit wenigstens einem Fluidauslass für von dem Gas abgeschiedenes Fluid, der bezüglich der Achse radial zwischen dem wenigstens einen ersten Gasdurchlass und dem wenigstens einen zweiten Gasdurchlass angeordnet ist, wobei zwischen dem wenigstens einen zweiten Gasdurchlass und dem wenigstens einen Fluidauslass wenigstens ein gehäuseseitiges Fluidauslass-Dichtungsteil wenigstens einer Fluidauslass-Dichteinrichtung angeordnet ist, das mit wenigstens einem entsprechenden verbindungsseitigen Fluidauslass-Dichtungsteil eines Verbindungsteils, das zur Verbindung des Gehäuses mit der Anschlusseinrichtung vorgesehen ist, dichtend zusammenwirkt, und mit wenigstens einem Filter- und/oder Abscheideelement, das in dem Gehäuse so angeordnet ist oder werden kann, dass es wenigstens einen ersten Gasdurchlass und wenigstens einen zweiten Gasdurchlass trennt.

Die Erfindung betrifft schließlich eine Vorrichtung zur Abscheidung wenigstens eines Fluids, insbesondere Öl, aus Gas, insbesondere Luft, insbesondere eine Luftentölbox oder ein Luftentölelement, insbesondere eines Kompressors, einer Druckluftanlage oder einer Vakuumpumpe, mit wenigstens einer Anschlusseinrichtung, mit der wenigstens eine Einrichtung zur Abscheidung des wenigstens einen Fluids verbunden ist.

### Stand der Technik

Aus der DE 10 2008 046 499 A1 ist ein Filter mit Drainageanschluss bekannt. Aus DE 85 01 736 U1 ist eine Vorrichtung zum Abscheiden von Öltröpfchen aus Luft bekannt. Aus der DE 10 2014 000 281 A1 ist ein becherförmiges Gehäuse für eine Vorrichtung zum Abscheiden von Flüssigkeit aus Luft, sowie eine diesbezügliche Vorrichtung, bekannt. Der Gehäusedeckel weist zum Abführen der gefilterten Reinluft mindestens eine reinluftseitige Öffnung auf. Der Gehäusedeckel weist zum Zuführen von Rohluft mindestens einen rohluftseitigen Rohlufteinlass auf. Zum Abdichten zwischen der Rohluftseite und der Reinluftseite, insbesondere des rohluftseitigen Rohlufteinlasses von der reinluftseitigen Öffnung, ist an der vom Innenraum des becherförmigen Gehäuses abgewandten Außenseite des Gehäusedeckels zumindest bereichsweise mindestens eine Dichtfläche angeordnet.

Der Erfindung liegt die Aufgabe zugrunde, ein Gehäuse, ein Fluidauslass-Dichtungsteil, einen Gehäusedeckel, ein Verbindungsteil, eine Einrichtung und eine Vorrichtung der eingangs genannten Art zu gestalten, bei denen eine Dichtheit von Verbindungen wenigstens eines Gasdurchlasses und/oder wenigstens eines Fluidauslasses, insbesondere eines Flüssigkeitsauslasses des Gehäuses mit der Anschlusseinrichtung und/oder dem Verbindungsteil, verbessert werden kann. Insbesondere sollen etwaige, insbesondere bauteilbedingte und/oder montagebedingte Toleranzen besser ausgeglichen werden können.

### Offenbarung der Erfindung

Diese Aufgabe wird erfindungsgemaß mit dem Gehäuse nach Anspruch 1 gelöst. Dabei ist vorgesehen, dass wenigstens ein gehäuseseitiges Fluidauslass-Dichtungsteil wenigstens einen ringförmigen Dichtungsabschnitt mit wenigstens einer wenigstens nach radial innen wirkenden, insbesondere nach radial innen ragenden, Dichtungsfläche und/oder mit wenigstens einer wenigstens nach radial außen wirkenden, insbesondere nach radial außen ragenden, Dichtungsfläche aufweist.

Wenigstens ein gehäuseseitiges Fluidauslass-Dichtungsteil wenigstens einer Fluidauslass-Dichteinrichtung ist zwischen dem wenigstens einen zweiten, äußeren Gasdurchlass und dem wenigstens einen Fluidauslass angeordnet. Das wenigstens eine gehäuseseitige Fluidauslass-Dichtungsteil kann mit wenigstens einem entsprechenden verbindungsseitigen Fluidauslass-Dichtungsteil des Verbindungsteils dichtend zusammenwirken. Mit der wenigstens einen Fluidauslass-Dichteinrichtung kann der wenigstens eine zweite Gasdurchlass gegen den wenigstens einen Fluidauslass abgedichtet werden. Auf diese Weise kann die Gefahr verringert werden, dass Gas aus dem wenigstens einen zweiten Gasdurchlass in den wenigstens einen Fluidauslass und/oder abgeschiedenes Fluid aus dem wenigstens einen Fluidauslass in den wenigstens einen zweiten Gasdurchlass gelangen kann. Das wenigstens eine gehäuseseitige Fluidauslass-Dichtungsteil kann vorteilhafterweise eine Dichtung sein oder zumindest aufweisen.

Erfindungsgemäß weist wenigstens ein gehäuseseitiges Fluidauslass-Dichtungsteil wenigstens eine wenigstens nach radial innen wirkende Dichtungsfläche auf. Alternativ oder zusätzlich kann das wenigstens eine gehäuseseitige Fluidauslass-Dichtungsteil wenigstens eine wenigstens nach radial außen wirkende Dichtungsfläche aufweisen. Bei der Verbindung des Gehäuses mit dem Verbindungsteil und/oder der Anschlusseinrichtung können das wenigstens eine gehäuseseitige Fluidauslass-Dichtungsteil und das wenigstens eine verbindungsseitige Fluidauslass-Dichtungsteil wenigstens in radialer Richtung aneinander liegen.

Radial wirkende Dichtungsflächen ermöglichen eine größere axiale Lagetoleranz als ausschließlich axial wirkende Dichtungsflächen. Das wenigstens ein wenigstens in radialer Richtung dichtend wirkende gehäuseseitige Fluidauslass-Dichtungsteil ist daher in Kombination mit einer Schraubverbindung, einer Steckverbindung, Dreh-Steckverbindung oder einer anderen Verbindung wenigstens mit einem bezüglich der Achse axialen Bewegungsanteil zum Verbinden des Gehäuses mit dem Verbindungsteil von großem Vorteil. Vorteilhafterweise können wenigstens ein gehäuseseitiges Fluidauslass-Dichtungsteil und wenigstens ein verbindungsseitiges Fluidauslass-Dichtungsteil koaxial, insbesondere koaxial zur Achse, sein. Auf diese Weise können die entsprechenden Fluidauslass-Dichtungsteile einfacher ineinander geführt werden. Die Fluidauslass-Dichtungsteile können dabei einfach aneinander entlanggleiten.

Bei einer radial nach innen oder außen ragenden Dichtungsfläche kann diese beispielsweise als radial nach innen oder außen ragender, die Dichtungsfläche zumindest mitbildender Wulst mit bevorzugt konvexer Form ausgestaltet sein, d. h. in der Form eines Ausschnitts eines O-Rings vorliegen. Alternativ oder zusätzlich kann eine radial nach innen oder außen ragende, insbesondere elastische Dichtlippe vorgesehen sein, die insbesondere an ihrem Endbereich die Dichtungsfläche aufweist. Vorteilhaft ist dabei insbesondere, dass der Teil des Fluidauslass-Dichtungsteil, welcher die Dichtungsfläche bereitstellt, etwas radial über an diesen Teil angrenzende Bereiche des Fluidauslass-Dichtungsteils hinausragt, so dass an der Dichtungsfläche eine definierte, dichtende Anlage an einer zylindrischen Gegenfläche ermöglicht wird.

Vorteilhafterweise kann wenigstens ein ringförmiger Dichtungsabschnitt des wenigstens einen gehäuseseitigen Fluidauslass-Dichtungsteils wenigstens eine Dichtfläche aufweisen, welche bezüglich der Achse axial wirkt. Auf diese Weise kann zusätzlich zu der radialen Dichtwirkung eine axiale Dichtwirkung erzeugt werden. Insgesamt kann so die Dichtheit verbessert werden.

Vorteilhafterweise kann wenigstens ein gehäuseseitiges Fluidauslass-Dichtungsteil wenigstens teilweise elastisch sein. Auf diese Weise kann sich das wenigstens eine gehäuseseitige Fluidauslass-Dichtungsteil einfacher an das entsprechende wenigstens eine verbindungsseitige Fluidauslass-Dichtungsteil anschmiegen. Ferner können so einfacher und besser Toleranzen ausgeglichen und/oder Schwingungen gedämpft werden. Das gehäuseseitige Fluidauslass-Dichtungsteil, insbesondere der Dichtungsabschnitt und/oder die Dichtungsfläche, ist dabei bevorzugt bei einer nach radial innen wirkenden Dichtungsfläche elastisch aufweitbar ausgelegt. Weiter bevorzugt erfolgt die Auslegung so, dass bei der Montage die Dichtung im Bereich der Dichtfläche radial nach außen elastisch aufgeweitet wird, so dass die zum Erreichen der Dichtheit notwendige Anpresskraft maßgeblich durch die elastische Aufweitung entsteht.

Vorteilhafterweise kann wenigstens ein gehäuseseitiges Fluidauslass-Dichtungsteil aus einem elas-tischen, insbesondere Fluid beständigen, Material, insbesondere Fluorkautschuk (FKM), sein oder ein derartiges Material zumindest aufweisen.

Das Verbindungsteil dient zur Verbindung des Gehäuses mit der Anschlusseinrichtung, insbesondere mit entsprechenden Fluidleitungen und/oder Gasleitungen. Wenigstens ein Teil des Verbindungsteils kann Teil des Gehäuses sein oder mit diesem fest oder lösbar verbunden, insbesondere vormontiert, sein. Alternativ oder zusätzlich kann wenigstens ein Teil des Verbindungsteils Teil der Anschlusseinrichtung sein oder mit dieser fest oder lösbar verbunden, insbesondere vormontiert, sein. Entsprechend kann das wenigstens eine verbindungsseitige Fluidauslass-Dichtungsteil mit dem Verbindungsteil und/oder der Anschlusseinrichtung fest oder lösbar verbunden sein.

Das wenigstens eine gehäuseseitige Fluidauslass-Dichtungsteil kann mit dem wenigstens einen verbindungsseitigen Fluidauslass-Dichtungsteil insbesondere automatisch dichtend zusammenwirken, sobald das Gehäuse entsprechend mit dem wenigstens einen entsprechenden Fluidauslass-Dichtungsteil des Verbindungsteils und/oder der Anschlusseinrichtung verbunden wird.

Bei der Anschlusseinrichtung kann es sich vorteilhafterweise um einen Anschlusskopf handeln. Der Anschlusskopf kann entsprechende Zuleitungen und/oder Ableitungen für das Gas und/oder das abgeschiedene Fluid aufweisen.

Vorteilhafterweise kann das Verbindungsteil einen rohrartigen, insbesondere zylindrischen und/oder konischen, Anschlussstutzen, Anschlussabschnitt oder Rohrstutzen aufweisen. Der rohrartige Anschlussstutzen kann, insbesondere wenn er anschlussseitig und/oder gehäuseseitig lösbar verbindbar ist, auch als Nippel oder Anschlussnippel bezeichnet werden. Ein Nippel, Anschlussnippel oder Rohrstutzen ist innen hohl. Auf diese Weise kann mit dem wenigstens einen Verbindungsteil zusätzlich eine Fluidleitung, insbesondere Gasleitung, realisiert werden. Mit dem Verbindungsteil kann sowohl eine mechanische Verbindung als auch eine fluidleitende Verbindung zwischen dem Gehäuse und der Anschlusseinrichtung realisiert werden.

Vorteilhafterweise kann das Gehäuse mittels einer Dreh- und/oder Steckverbindung mit der Anschlusseinrichtung verbunden werden. Die Dreh- und/oder Steckverbindung kann vorteilhafterweise bezüglich der Achse dreh- und/oder steckbar sein. Vorteilhafterweise kann die Achse mit einer Montageachse des Gehäuses mit der Anschlusseinrichtung, insbesondere des Gehäuses mit dem Verbindungsteil und/oder des Verbindungsteils mit der Anschlusseinrichtung, zusammenfallen. Das Gehäuse kann insbesondere mittels einer Schraubverbindung direkt oder indirekt insbesondere mittels des Verbindungsteils in oder auf die Anschlusseinrichtung geschraubt werden. Eine Schraubverbindung ist eine kombinierte Dreh-/Steckverbindung, bei der durch eine Drehbewegung eine Steckbewegung realisiert wird.

Vorteilhafterweise kann die Achse koaxial oder parallel zu einer Gehäuseachse des Gehäuses, insbesondere eines Gehäusetopfs und/oder eines Gehäusedeckels, und/oder einer Elementachse eines in dem Gehäuse angeordneten Filter- und/oder Abscheideelements sein. Vorteilhafterweise kann die Achse koaxial zu einer Achse des Verbindungsteils sein.

Das Verbindungsteil kann wenigstens ein Verbindungselement zum Verbinden mit dem Gehäuse und/oder der Anschlusseinrichtung, insbesondere mittels einer Dreh- und/oder Steckverbindung, insbesondere einer Schraubverbindung, einer Steckverbindung, einer Klemmverbindung, einer Rastverbindung und/oder einer bajonettartigen Verbindung oder dergleichen, aufweisen. Insbesondere kann das Verbindungsteil wenigstens ein Außengewinde und/oder wenigstens ein Innengewinde aufweisen. Entsprechend kann das Gehäuse und/oder die Anschlusseinrichtung wenigstens ein passendes Innengewinde und/oder wenigstens ein Außengewinde aufweisen. Die Gewinde können vorteilhafterweise koaxial zur Achse sein.

Das Gehäuse ist erfindungsgemäß topfförmig und an einer Stirnseite mit einem Gehäusedeckel verschlossen sein. Vorteilhafterweise kann das Verbindungsteil und/ oder die Anschlusseinrichtung an einer Stirnseite insbesondere gegebenenfalls mit dem Gehäusedeckel verbunden sein/werden.

Vorteilhafterweise kann das Gehäuse, insbesondere der Gehäusetopf und/oder der Gehäusedeckel, aus Metall und/oder Kunststoff sein oder eines dieser Materialien wenigstens aufweisen.

In dem Gehäuse kann vorteilhafterweise wenigstens ein Filter- und/oder Abscheideelement, insbesondere wenigstens ein Filterelement, wenigstens ein Koaleszenzelement, wenigstens eine Abscheide- oder Prallwand und/oder ein Zyklon oder dergleichen oder eine Kombination von unterschiedlichen Abscheideelementen, angeordnet sein. Mit dem wenigstens einen Filter- und/oder Abscheideelement kann das Fluid von dem Gas abgeschieden werden. Zusätzlich oder alternativ können mit dem wenigstens einen Filter- und/oder Abscheideelement in dem Gas etwa enthaltene Partikel herausgefiltert werden. Wenigstens ein Filter- und/oder Abscheideelement kann als Filterelement, insbesondere Luftfilterelement, ausgestaltet sein.

Vorteilhafterweise kann bei wenigstens einem Filter- und/oder Abscheideelement wenigstens ein Filtermedium mit wenigstens einem Abscheidemedium, insbesondere einem Koaleszenzmedium, für das Fluid, insbesondere einer Flüssigkeit, kombiniert oder verbunden sein. Auf diese Weise kann ein Bauraumbedarf verringert werden.

Vorteilhafterweise kann wenigstens ein Filter- und/oder Abscheideelement, insbesondere ein Filtermedium und/oder einem Koaleszenzmedium, die Achse umfangsmäßig, insbesondere geschlossen, umgeben.

Vorteilhafterweise kann der wenigstens eine erste Gasdurchlass für eine Gasströmung beim Betrieb der Einrichtung zur Abscheidung eines Fluids vorgesehen sein, die bezüglich einem Innenraum des Gehäuses entgegengesetzt zu einer Gasströmung durch den wenigstens einen zweiten Gasdurchlass gerichtet ist. Vorteilhafterweise kann der wenigstens eine erste Gasdurchlass ein Gasauslass für behandeltes Gas sein. Der wenigstens eine zweite Gasdurchlass kann entsprechend ein Gaseinlass für zu behandelndes Gas sein. Alternativ kann der wenigstens eine erste Gasdurchlass ein Gaseinlass und der wenigstens eine zweite Gasdurchlass ein Gasauslass sein.

Vorteilhafterweise kann wenigstens ein erster Gasdurchlass koaxial zur Achse angeordnet sein.

Wenigstens ein Filter- und/oder Abscheideelement kann vorteilhafterweise zwischen wenigstens einem Gaseinlass und wenigstens einem Gasauslass angeordnet sein und diese voneinander trennen. Auf diese Weise kann das wenigstens eine Filter- und/oder Abscheideelement von dem Gas zwangsdurchströmt werden.

Das Gas kann das wenigstens eine Filter- und/oder Abscheideelement bezüglich der Achse von radial außen nach radial innen oder umgekehrt durchströmen, abhängig davon, welcher der Gasdurchlässe als Gaseinlass und welcher als Gasauslass dient.

Das wenigstens eine Fluid, insbesondere eine Flüssigkeit wie zum Beispiel Öl, kann mit dem wenigstens einen Abscheideelement von dem Gas abgeschieden werden. Das Fluid kann der Schwerkraft folgend nach unten in einen unteren Bereich des Gehäuses sinken.

Vorteilhafterweise kann der wenigstens eine Fluidauslass in einem unteren Bereich aus dem Gehäuse führen. Das abgeschiedene Fluid kann so durch den wenigstens einen Fluidauslass das Gehäuse verlassen. Der wenigstens eine Fluidauslass kann mit einem Fluidkanal insbesondere in oder an dem Verbindungsteil und/oder der Anschlusseinrichtung verbunden sein/werden.

Vorteilhafterweise kann das wenigstens eine gehäuseseitige Fluidauslass-Dichtungsteil an einer Stirnseite des Gehäuses, insbesondere gegebenenfalls an dem Gehausedeckel, angeordnet sein.

Vorteilhafterweise kann das wenigstens eine gehäuseseitige Fluidauslass-Dichtungsteil bezüglich der Achse wenigstens teilumfänglich verlaufen. Vorteilhafterweise kann das wenigstens eine gehäuseseitige Fluidauslass-Dichtungsteil die Achse umfangsmäßig geschlossen umgeben.

Vorteilhafterweise kann das wenigstens eine gehäuseseitige Fluidauslass-Dichtungsteil, insbesondere ein Dichtungsabschnitt, wenigstens einen insbesondere bezüglich der Fluidströmung stromabwärtigen Abschnitt des wenigstens einen Fluidauslasses umfangsmäßig insbesondere geschlossen umgeben.

Vorteilhafterweise kann der wenigstens eine zweite Gasdurchlass bezüglich der Achse radial außerhalb des wenigstens einen gehäuseseitigen Fluidauslass-Dichtungsteils angeordnet sein.

Vorteilhafterweise kann eine Mehrzahl von zweiten Gasdurchlässen bezüglich der Achse umfangsmäßig insbesondere gleichmäßig verteilt angeordnet sein.

Vorteilhafterweise können wenigstens ein erster Gasdurchlass, wenigstens ein zweiter Gasdurchlass und wenigstens ein Fluidauslass an derselben Stirnseite des Gehäuses, insbesondere an oder in dem Gehäusedeckel, angeordnet sein. Auf diese Weise kann eine Verbindung des Gehäuses mit dem Verbindungsteil und/oder der Anschlusseinrichtung einfacher und/oder platzsparender realisiert werden.

Vorteilhafterweise kann die Erfindung bei einer Gasentölvorrichtung, insbesondere einer Luftentölvorrichtung, insbesondere mit einer so genannten Luftentölbox oder einem so genannten Luftentölelement, verwendet werden. Mit einer Gasentölvorrichtung können etwaige im Gas mitgetragene Öltröpfchen abgeschieden und entfernt werden. Derartige Gasentölvorrichtungen können vorteilhafterweise bei Kompressoren, Vakuumpumpen oder Druckluftanlagen verwendet werden. Sie können strömungstechnisch vor einem Gaseinlass des entsprechenden Gerätes angeordnet sein. Auf diese Weise kann das Gas entölt werden, bevor es in das Gerät gelangt. Alternativ oder zusätzlich kann wenigstens eine Gasentölvorrichtung strömungstechnisch nach einem Gasauslass des Geräts angeordnet sein. Auf diese Weise kann Öl, welches insbesondere beim Betrieb des Gerätes in das Gas gelangen kann, nach dem Austritt aus dem Gerät entfernt werden. Vorteilhafterweise kann die Anschlusseinrichtung mit entsprechenden Gasleitungen versehen sein.

Die Erfindung kann auch in Verbindung mit einer Brennkraftmaschine, insbesondere einem Ansaugtrakt für Verbrennungsgas, insbesondere Verbrennungsluft, oder einer Kurbelgehäuseentlüftung, verwendet werden. Die Erfindung kann bei Brennkraftmaschinen von Kraftfahrzeugen oder andersartigen Brennkraftmaschinen, insbesondere Industriemotoren, eingesetzt werden. Sie kann auch außerhalb von Brennkraftmaschinen, insbesondere bei Kraftfahrzeugen, verwendet werden.

Die Erfindung kann statt bei einer Einrichtung zur Abscheidung von Öl auch zur Abscheidung von andersartigen Fluiden aus Gas verwendet werden. Sie kann auch in Verbindung mit einer Raumluftanlage oder Klimaanlage eingesetzt werden.

Vorteilhafterweise kann wenigstens zwischen wenigstens einem zweiten Gasdurchlass und einer Umgebung wenigstens ein gehäuseseitiges Umgebungsdichtungsteil wenigstens einer Umgebungsdichteinrichtung angeordnet sein. Das wenigstens eine gehäuseseitige Umgebungsdichtungsteil kann mit wenigstens einem entsprechenden insbesondere anschlussseitigen und/ oder verbindungsseitigen Umgebungsdichtungsteil der Anschlusseinrichtung und/oder des Verbindungsteils dichtend zusammenwirken. Mit der Umgebungsdichteinrichtung kann der wenigstens eine zweite Gasdurchlass zur Umgebung hin abgedichtet werden. Als Umgebung wird der das Gehäuse in seiner Montageposition an der Anschlusseinrichtung umgebende Raum betrachtet.

Der wenigstens eine zweite Gasdurchlass kann bezüglich der Achse radial relativ weit außen liegen. Insbesondere kann er bezüglich der Achse weiter außen als der wenigstens eine Fluidauslass und/oder der wenigstens eine erste Gasdurchlass angeordnet sein.

Vorteilhafterweise kann das gehäuseseitige Umgebungsdichtungsteil wenigstens eine Dichtung und/oder wenigstens eine Dichtfläche aufweisen. Entsprechend kann das wenigstens eine insbesondere anschlussseitige und/oder verbindungsseitige Umgebungsdichtungsteil wenigstens eine Dichtungsfläche und/oder wenigstens eine Dichtung aufweisen.

Vorteilhafterweise kann das wenigstens eine gehäuseseitige Umgebungsdichtungsteil mit dem wenigstens einen insbesondere anschlussseitigen Umgebungsdichtungsteil wenigstens axial dichtend zusammenwirken. Auf diese Weise kann eine Haltekraft des Gehäuses an der Anschlusseinrichtung und/oder dem Verbindungsteil, welche parallel zur Achse gerichtet ist, die Umgebungsdichtungsteile stärker zusammenpressen. So kann eine Dichtwirkung verbessert werden.

Vorteilhafterweise können wenigstens ein gehäuseseitiges Umgebungsdichtungsteil und wenigstens ein gehäuseseitiges Fluidauslass-Dichtungsteil an der gleichen Stirnseite des Gehäuses, insbesondere dem Gehäusedeckel, angeordnet sein.

Vorteilhafterweise kann wenigstens ein gehäuseseitiges Umgebungsdichtungsteil wenigstens ein gehäuseseitiges Fluidauslass-Dichtungsteil bezüglich der Achse wenigstens teilumfänglich umgeben. Auf diese Weise können auch der wenigstens eine erste Gasdurchlass und der wenigstens eine Fluidauslass zur Umgebung hin abgedichtet werden.

Die wenigstens eine Umgebungsdichtungseinrichtung kann auch als äußere Dichteinrichtung und die entsprechenden Dichtungsteile als äußere Dichtungsteile bezeichnet werden. Entsprechend können die wenigstens eine Fluidauslass-Dichteinrichtung als innere Dichteinrichtung und deren Dichtungsteile als innere Dichtungsteile bezeichnet werden.

Vorteilhafterweise kann die Kombination der wenigstens einen wenigstens radial wirkenden Fluidauslass-Dichteinrichtung und der wenigstens einen wenigstens axial wirkenden Umgebungsdichteinrichtung größere Maßtoleranzen bei der Einrichtung zur Abscheidung wenigstens eines Fluids insbesondere dem Gehäuse, und/oder der Anschlusseinrichtung erlauben.
Bei einer vorteilhaften Ausführungsform kann bezüglich der Achse radial außerhalb wenigstens eines gehäuseseitigen Fluidauslass-Dichtungsteils wenigstens im Bereich einer radial inneren Dichtungsfläche kein Abstützmittel insbesondere des Gehäuses und/oder der Anschlusseinrichtung und/oder des Verbindungsteils zum radialen Abstützen des wenigstens einen gehäuseseitigen Fluidauslass-Dichtungsteils vorgesehen sein. Auf diese Weise ist kein zusätzliches Abstützmittel erforderlich, so dass ein Montageaufwand und/oder ein Platzbedarf verringert werden kann. An der radial äußeren Umfangsseite wenigstens eines gehäuseseitigen Fluidauslass-Dichtungsteils kann ein Gasdruck oder Fluiddruck angreifen. Mit den Gasdruck oder Fluiddruck kann die wenigstens eine radial innere Dichtungsfläche verstärkt gegen die entsprechende Dichtfläche des verbindungsseitigen Fluidauslass-Dichtungsteils gepresst werden. So kann eine Dichtwirkung verbessert werden.

Bei einer weiteren vorteilhaften Ausführungsform kann wenigstens ein ringförmiger Dichtungsabschnitt wenigstens abschnittsweise einen konvexkonkaven Querschnitt aufweisen. Durch die entsprechende Wölbung des wenigstens einen ringförmigen Dichtungsabschnitts kann ein Fluiddruck besser auf diesen einwirken. Die Dichtwirkung kann so verbessert werden.

Vorteilhafterweise kann sich die konkave Seite aufseiten wenigstens einer Dichtungsfläche, insbesondere einer radial inneren Dichtungsfläche, befinden. Auf diese Weise kann der wenigstens eine ringförmige Dichtungsabschnitt einfacher auf ein entsprechendes verbindungsseitiges Fluidauslass-Dichtungsteil gesteckt werden. Durch das entsprechende Profil des ringförmigen Dichtungsabschnitts kann bei einem wenigstens teilweise elastischen Dichtungsabschnitt eine elastische mechanische Spannung aufgebaut werden, durch welche eine Dichtwirkung verstärkt wird. Ferner kann ein Außendruck besser an der radial äußeren Umfangsseite des ringförmigen Dichtungsabschnitts angreifen und so die Dichtfunktion weiter erhöhen. Der wenigstens eine ringförmige Dichtungsabschnitt kann nach radial außen gewölbt sein.

Erfindungsgemäß weist wenigstens ein gehäuseseitiges Fluidauslass-Dichtungsteil wenigstens einen Befestigungsabschnitt auf, mit dem es an wenigstens einem Gehäuseteil befestigt sein oder werden kann. Vorteilhafterweise kann wenigstens ein Befestigungsabschnitt wenigstens ein steckbares Befestigungsmittel aufweisen. Steckbare Befestigungsmittel können einfach in entsprechende Öffnungen des wenigstens einen Gehäuseteils gesteckt werden.

Vorteilhafterweise kann wenigstens ein gehäuseseitiges Fluidauslass-Dichtungsteil mit wenigstens einem Befestigungsabschnitt an einem Gehäusedeckel des Gehäuses befestigt sein oder werden.

Erfindungsgemäß weist wenigstens ein Befestigungsabschnitt wenigstens einen hohlen Befestigungsnippel auf. Der Befestigungsnippel ist ferner als steckbares Befestigungsmittel ausgestaltet und der hohle Innenraum des Befestigungsmittels dient als Fluidkanal und ist in den wenigstens einen Fluidauslass eingesteckt. Auf diese Weise kann der wenigstens eine Befestigungsnippel gleichzeitig als Befestigungsmittel und als Durchlass für Fluid wirken. Der wenigstens eine Befestigungsnippel kann so in eine entsprechende Fluidöffnung, insbesondere ein Ölablassloch, eines entsprechenden Gehäuseteils eingesteckt werden. Dadurch wird ermöglicht, dass das Fluid durch die Fluidöffnung, nämlich durch den hohlen Innenraum des darin eingesteckten Befestigungsnippels, fließen kann.

Bei einer weiteren vorteilhaften Ausführungsform kann wenigstens ein Fluidauslass zur Verbindung mit wenigstens einem Befestigungsabschnitt wenigstens eines gehäuseseitigen Fluidauslass-Dichtungsteils ausgestaltet sein. So kann der wenigstens eine Fluidauslass zusätzlich zur Befestigung des wenigstens einen gehäuseseitigen Fluidauslass-Dichtungsteils dienen.

Erfindungsgemaß ist wenigstens ein Fluidauslass zur Aufnahme wenigstens eines Befestigungsnippels ausgestaltet und der wenigstens eine Befestigungsnippel in den wenigstens einen Fluidauslass eingesteckt.

Bei einer weiteren vorteilhaften Ausführungsform kann wenigstens ein verbindungs-seitiges Fluidauslass-Dichtungsteil an seiner bezüglich der Achse radial äußeren Umfangsseite wenigstens eine Stufe aufweisen, deren radial innen gelegene Umfangsseite eine nach radial außen gerichtete verbindungsseitige Dichtfläche aufweisen kann zum Zusammenwirken mit wenigstens einer nach radial innen wirkenden Dichtungsfläche wenigstens eines gehäuseseitigen Fluidauslass-Dichtungsteils. Auf die radial innen gelegene Umfangsseite der wenigstens einen Stufe kann ein ringförmiger Dichtungsabschnitt des wenigstens einen gehäuseseitigen Fluidauslass-Dichtungsteils bezüglich der Achse in axialer Richtung gesteckt werden. Die nach radial innen wirkende Dichtungsfläche kann dabei an der nach radial außen gerichteten verbindungsseitigen Dichtfläche in radialer Richtung dichtend wirkend anliegen.

Vorteilhafterweise kann ein sich radial erstreckender Teil der wenigstens einen Stufe eine axial gerichtete verbindungsseitige Stütz- und/oder Dichtfläche aufweisen. An der axial gerichteten verbindungsseitigen Stütz- und/oder Dichtfläche kann eine Stirnseite des ringförmigen Dichtungsabschnitts des wenigstens einen gehäuseseitigen Fluidauslass-Dichtungsteil insbesondere dichtend anliegen und/oder abgestützt werden. Auf diese Weise kann auch eine in axialer Richtung wirkenden Dichtfunktion erreicht werden.

Bei einer weiteren vorteilhaften Ausführungsform kann wenigstens ein erster Gasdurchlass eine Montageöffnung für wenigstens ein Verbindungsteil aufweisen. In die Montageöffnung kann das wenigstens eine Verbindungsteil eingeführt werden. Das wenigstens eine Verbindungsteil kann durch die Montageöffnung hindurchführen und in einen Innenraum des Gehäuses und/oder wenigstens eines Filter- und/oder Abscheideelements führen.

Vorteilhafterweise kann eine Achse des wenigstens einen Verbindungsteils bei montiertem Gehäuse axial, insbesondere koaxial, zur Achse verlaufen. Zur Montage kann das wenigstens eine Verbindungsteil so axial zur Achse durch die Montageöffnung geführt werden.

Das wenigstens eine Verbindungsteil kann vorteilhafterweise mittels einer Dreh- und/ oder Steckverbindung, insbesondere einer Schraubverbindung, mit der Montageöffnung verbunden sein.

Vorteilhafterweise kann eine radial äußere Umfangsseite des wenigstens einen Verbindungsteils ein Außengewinde aufweisen, welches zur Verbindung mit dem Gehäuse mit einem entsprechenden Innengewinde im Bereich der Montageöffnung verschraubt werden kann.

Vorteilhafterweise kann wenigstens ein Fluidauslass wenigstens eine Durchlassöffnung aufweisen.

Vorteilhafterweise kann wenigstens eine Durchlassöffnung materialtechnisch von der wenigstens einen Montageöffnung getrennt sein. Vorteilhafterweise kann wenigstens ein Fluidauslass bezüglich der Achse zu der wenigstens einen Montageöffnung radial beabstandet sein. Zwischen der wenigstens einen Montageöffnung und dem wenigstens einen Fluidauslass kann sich wenigstens ein Materialabschnitt, insbesondere ein Materialsteg, des Gehäuses, insbesondere des Gehäusedeckels, befinden. Der Materialabschnitt kann die Montageöffnung von dem Fluidauslass trennen. Insbesondere bei Verwendung einer Schraubverbindung zwischen dem Verbindungsteil und dem Gehäuse kann so das Innengewinde im Bereich der Achse umfangsmäßig gleichmäßig und geschlossen mit dem Außengewinde des Verbindungsteils zusammenwirken.

Bei einer weiteren vorteilhaften Ausführungsform können wenigstens ein Gasdurchlass und/oder wenigstens ein Fluidauslass und/oder wenigstens ein gehäuseseitiges Fluidauslass-Dichtungsteil und/oder wenigstens ein gehäuseseitiges Umgebungsdichtungsteil in/an/mit einem Gehäusedeckel eines insbesondere becherförmigen Gehäuses realisiert sein. Auf diese Weise können die genannten Bauteile einfach an dem Gehäusedeckel realisiert werden. Der Gehäusedeckel kann unabhängig von dem restlichen Gehäuse, insbesondere dem Gehäusetopf, realisiert und/oder vormontiert werden.

Beim Zusammenbau der Einrichtung zur Abscheidung des Fluids kann einfach ein entsprechendes Abscheide- und/oder Filterelement in das Gehäuse eingebracht werden. Anschließend kann das Gehäuse mit dem Gehäusedeckel verschlossen werden.

Das vormontierte Gehäuse kann einfach mit dem Verbindungsteil ausgestattet werden. Alternativ kann die Anschlusseinrichtung mit dem Verbindungsteil ausgestattet werden. Anschließend können das Gehäuse und die Anschlusseinrichtung verbunden werden. Dabei wird das Verbindungsteil entsprechend mit dem jeweils anderen Bauteil verbunden. Beim Verbinden können automatisch die Gasdurchlässe und der wenigstens eine Fluidauslass mit entsprechenden Gaskanälen und Fluidkanälen des Verbindungsteils und/oder der Anschlusseinrichtung in Verbindung gebracht werden. Ebenso können je nach Mon-tagemethode die Fluidauslass-Dichteinrichtung und gegebenenfalls die Umgebungsdichteinrichtung im selben Montageschritte oder in unterschiedlichen Montageschritten jeweils automatisch aktiviert werden.

Erfindungsgemäß weist das gehäuseseitige Fluidauslass-Dichtungsteil wenigstens einen ringförmigen Dichtungsabschnitt mit wenigstens einer nach radial innen wirkenden Dichtungsfläche und/oder mit wenigstens einer nach radial außen wirkenden Dichtungsfläche auf.

Erfindungsgemäß ist ferner an dem Gehäusedeckel wenigstens ein Fluidauslass zur Aufnahme wenigstens eines Befestigungsnippels wenigstens eines gehäuseseitigen Fluidauslass-Dichtungsteils ausgestaltet.

Vorteilhafterweise kann das Verbindungsteil wenigstens einen Fluiddurchlass aufweisen oder zumindest mit bilden für wenigstens einen Fluidauslass des Gehäuses für von dem Gas abgeschiedenes Fluid, der außerhalb des wenigstens einen gasleitenden Raums angeordnet ist, wobei auf einer dem gasleitenden Raum abgewandten Seite des wenigstens einen Fluidauslasses wenigstens ein verbindungsseitiges Fluidauslass-Dichtungsteil wenigstens einer Fluidauslass-Dichteinrichtung angeordnet ist, das mit wenigstens einem entsprechenden gehäuseseitigen Fluidauslass-Dichtungsteil dichtend zusammenwirken kann.

Das Verbindungsteil umfasst vorteilhaft wenigstens ein verbindungsseitiges Fluidauslass-Dichtungsteil, insbesondere wenigstens eine Dichtfläche und/oder eine Dichtungsaufnahme, insbesondere eine Stufe, für
wenigstens eine Dichtung und/oder wenigstens eine Dichtung, wenigstens einer Fluidauslass-Dichteinrichtung, die mit wenigstens einem gehäuseseitigen Fluidauslass-Dichtungsteil der wenigstens einen Fluidauslass-Dichteinrichtung bezüglich der Achse wenigstens in radialer Richtung dichtend zusammenwirken kann.

Vorteilhafterweise kann das wenigstens eine verbindungsseitige Fluidauslass-Dichtungsteil wenigstens eine bezüglich der Achse wenigstens radial gerichtete, insbesondere umfangsmäßig und axial verlaufende, Dichtfläche aufweisen. Vorteilhafterweise kann die wenigstens einen Dichtfläche die Form eines Zylindermantels, insbesondere Kreiszylindermantels, aufweisen.

Des Weiteren wird die Aufgabe erfindungsgemäß mit der Einrichtung zur Abscheidung eines Fluids dadurch gelöst, dass wenigstens ein gehäuseseitiges Fluidauslass-Dichtungsteil wenigstens einen ringförmigen Dichtungsabschnitt mit wenigstens einer nach radial innen wirkenden Dichtungsfläche und/oder mit wenigstens einer nach radial außen wirkenden Dichtungsfläche aufweist.

Ferner wird die Aufgabe erfindungsgemäß mit der Vorrichtung mit einem erfindungsgemäßen Gehäuse und einer erfindungsgemäßen Einrichtung gelöst.

Im Übrigen gelten die im Zusammenhang mit dem erfindungsgemäßen Gehäuse, dem erfindungsgemäßen Fluidauslass-Dichtungsteil, dem erfindungsgemäßen Gehäusedeckel, dem erfindungsgemäßen Verbindungsteil, der erfindungsgemaßen Einrichtung und der erfindungsgemäßen Vorrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt einer Luftentölvorrichtung mit einem Luftentölelement, das austauschbar mit einem Anschlusskopf verbunden ist;
- Figur 2: eine Detailansicht des Luftentölelements aus der Figur 1 im Bereich des Gehäusedeckels;
- Figur 3: eine isometrische Darstellung eines Gehäusedeckels des Luftentölelements aus den Figuren 1 und 2 mit Blick auf die Innenseite des Gehäusedeckels;
- Figur 4: den Gehäusedeckel aus der Figur 3 mit Blick auf dessen Außenseite;
- Figur 5: eine isometrische Darstellung einer Ölablass-Dichtung des Luftentölelements aus den Figuren 1 und 2 mit Blick auf dessen dem Gehäuse-deckel zugewandte Oberseite;
- Figur 6: einen Schnitt der Ölablass-Dichtung aus der Figur 5;
- Figur 7: eine isometrische Darstellung einer dem Gehäusedeckel zugewandten unteren Endscheibe eines Filterelements des Luftentölelements aus den Figuren 1 und 2 mit Blick auf deren Außenseite;
- Figur 8: eine isometrische Darstellung der unteren Endscheibe aus der Figur 8 mit Blick auf dessen Innenseite.

In den Figuren sind gleiche Bauteile mit gleichen Bezugszeichen versehen.

### Ausführungsform(en) der Erfindung

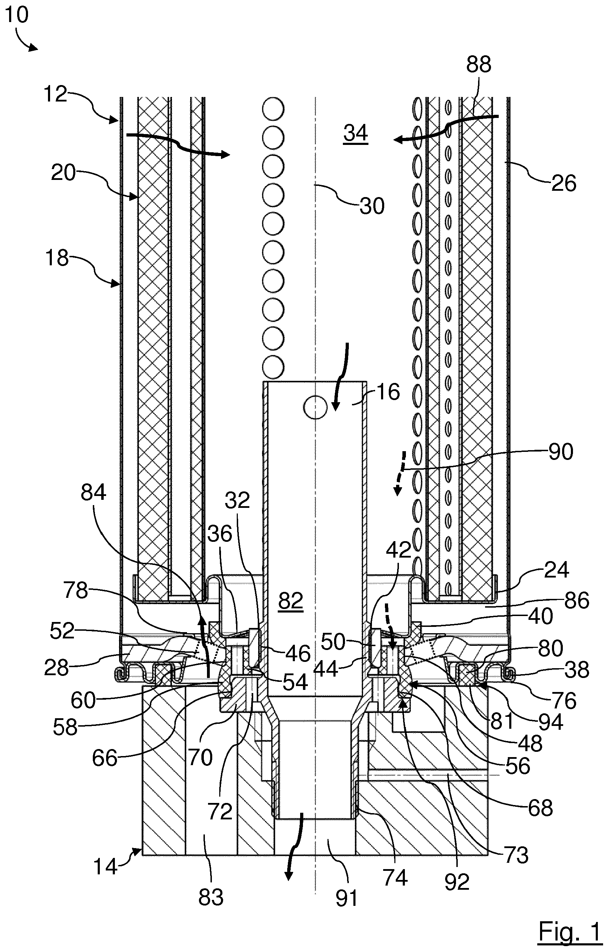

In den Figuren 1 bis 8 ist eine Luftentölvorrichtung 10 und ihre Komponenten in unterschiedlichen Darstellungen, Schnitten und Detailansichten gezeigt. Die Luftentölvorrichtung 10 dient zur Abscheidung von etwa in Luft mitgetragenem Öl von der Luft und der Filtrierung der Luft. Die Luftentölvorrichtung 10 findet beispielsweise Einsatz bei Kompressoren, Vakuumpumpen, Druckluftanlagen oder dergleichen. Sie kann vor einem Einlass oder nach einem Auslass eines entsprechenden Gerätes angeordnet sein.

Die Luftentölvorrichtung 10 umfasst ein Luftentölelement 12, das auch als Luftentölbox bezeichnet werden kann. Das Luftentölelement 12 ist austauschbar an einem stationären Anschlusskopf 14, in Figur 1 unten, befestigt. Der Anschlusskopf 14 dient als Anschlusseinrichtung für entsprechende Luftleitungen 83 und 91 und Ölleitungen 73 zur Verbindung mit dem entsprechenden Gerat. Ein hohler, rohrstutzenartiger Verbindungsnippel 16 verbindet das Luftentölelement 12 mit dem Anschlusskopf 14. Der Innenraum des Verbindungsnippels 16 ist luftleitend.

Das Luftentölelement 12 umfasst ein becherförmiges Gehäuse 18. In dem Gehäuse 18 ist beispielhaft ein als ringförmiges Koaleszenzelement ausgebildetes Filterelement 20 als Filter- und Abscheideelement angeordnet. Als Filtermedium weist das Filterelement 20 beispielhaft eine Glasfasermatte auf, die mehrfach ringförmig gewickelt und stirnseitig durch eine in den Figuren nicht gezeigte obere Endscheibe und eine dem Anschlusskopf 14 zugewandte untere Endscheibe 24 begrenzt ist. Als weiteres Filtermedium ist im Inneren der Glasfaserwicklung ein Vlies angeordnet.

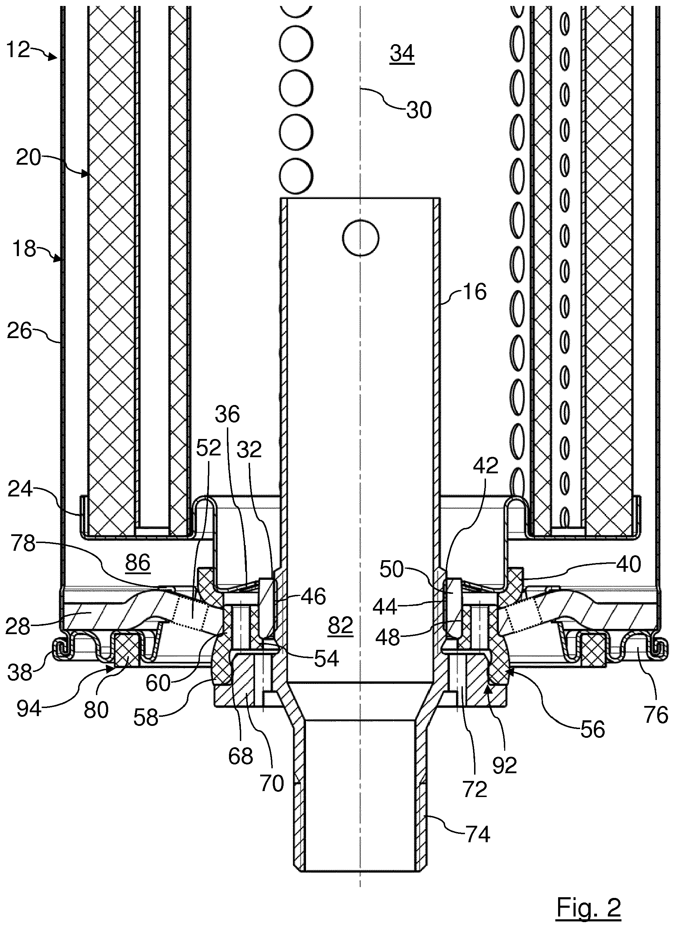

In der Regel ist die Luftentölvorrichtung 10 betriebsbereit in der Orientierung angeordnet, die in den Figuren 1 und 2 gezeigt ist. Sie kann jedoch auch in anderen Orientierungen angeordnet sein. Wenn im Folgenden von "unten", "oben" oder dergleichen die Rede ist, so bezieht sich dies, wenn nicht anders erwähnt, auf die Darstellung in den Figuren 1 und 2.

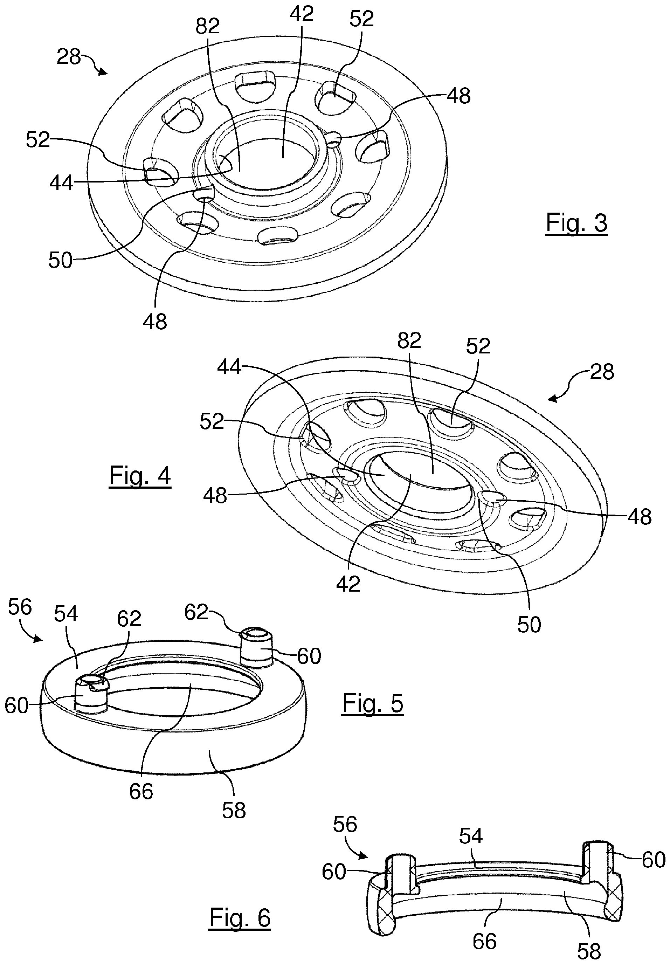

Das Gehäuse 18 umfasst einen Gehäusetopf 26, dessen dem Anschlusskopf 14 zugewandte Öffnung mit einem Gehäusedeckel 28 verschlossen ist. Der Gehäusetopf 26 und der Gehäusedeckel 28 sind beispielsweise aus Metall. Alternativ kann wenigstens eines der beiden Bauteile aus einem andersartigen Material, beispielsweise Kunststoff, sein oder ein andersartiges Material wenigstens aufweisen. Der Gehäusedeckel 28 ist im Detail in den Figuren 3 und 4 gezeigt.
Das Gehäuse 18, das Filterelement 20 und der Verbindungsnippel 16 sind bei der betriebsbereit montierten Luftentölvorrichtung 10 jeweils koaxial zu einer gedachten Montageachse 30. Um die Montageachse 30 kann das Luftentölelement 12 mittels dem Verbindungsnippel 16 auf den Anschlusskopf 14 geschraubt und von diesem abgeschraubt werden.

Wenn im Folgenden von "radial", "axial", "koaxial" oder "umfangsmäßig" oder dergleichen die Rede ist, so bezieht sich dies, falls nicht anders erwähnt, auf die Montageachse 30.

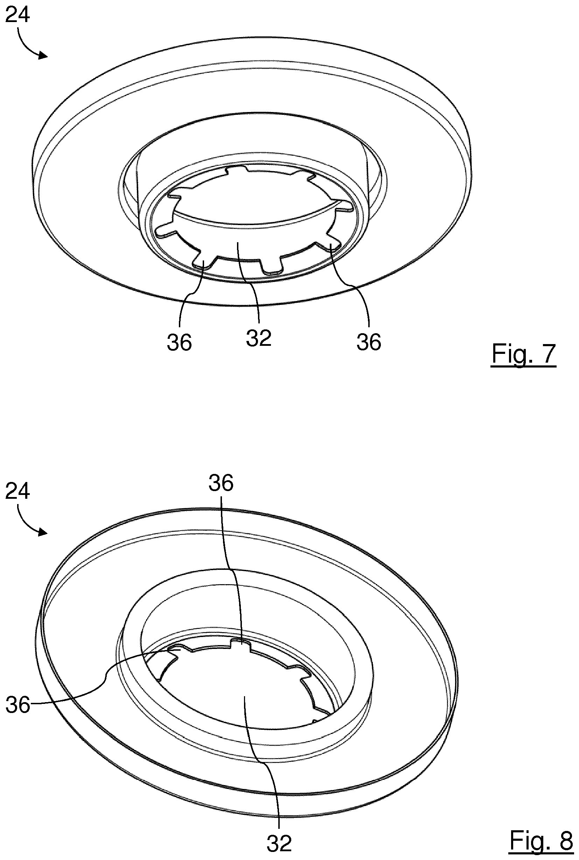

Die dem Gehäusedeckel 28 zugewandte untere Endscheibe 24, welche in den Figuren 7 und 8 im Detail gezeigt ist, ist etwa ringförmig. Sie weist eine koaxiale Durchsteck-öffnung 32 für den Verbindungsnippel 16 auf. Radial zwischen der Durchstecköffnung 32 und dem Filtermedium des Filterelements 20 ist die untere Endscheibe 24 mehrfach gebogen, so dass sich eine umfangsmäßige Ringmulde ergibt, die zu einem Elementinnenraum 34 des Filterelements 20 hin offen ist.

Der radial innere Rand der unteren Endscheibe 24 umgibt die Durchstecköffnung 32. Am radial inneren Rand der unteren Endscheibe 24 ist eine Mehrzahl von Durchtrittsöffnungen 36 für abgeschiedenes Öl angeordnet. Die Durchtrittsöffnungen 36 sind umfangsmäßig gleichmäßig verteilt. Die Durchtrittsöffnungen 36 haben jeweils etwa die Form eines Langlochs, dessen lange Seite sich vom Boden der oben genannten Ringmulde nach radial innen erstreckt. Sie sind jeweils auf ihren radial inneren Umfangsseiten offen.

Der Gehäusedeckel 28 ist mittels einem Haltering 76 an dem Gehäusetopf 26 gehalten, wie weiter unten noch näher erläutert wird. Der Haltering 76 ist mit einer Bördelverbindung 38 mit dem Rand des Gehäusetopfs 26 verbunden.

Die die Ringmulde unten begrenzende axiale Außenseite der unteren Endscheibe 24 überragt das Filtermedium in axialer Richtung. Ein die Talsohle der Ringmulde bildender Abschnitt der Außenseite der unteren Endscheibe 24 liegt umfangsmäßig zusammenhängend in axialer Richtung an einem Dämpfungsring 40 an. Der Dämpfungsring 40 stützt sich auf der axial gegenüberliegenden Seite an einer Innenseite des Gehäusedeckels 28 ab. Der Dämpfungsring 40 ist koaxial zur Montageachse 30. Er hat ein L-förmiges Profil. Der Dämpfungsring 40 dient unter anderem zur Geräuschdämpfung, als so genannter Klapperschutz. Er schränkt die axiale und radialer Beweglichkeit des Filterelements 20 in dem Gehäuse 18 ein und verhindert so, dass Klappergeräusche entstehen. Ferner kann der Dämpfungsring 40 als Toleranzausgleich und/oder zur Dämpfung von betriebsbedingten Vibrationen oder Schwingungen dienen.

Der Gehäusedeckel 28 ist im Wesentlichen kreisrund. Er ist koaxial zur Montageachse 30 angeordnet. Im Profil ist der Gehäusedeckel 28 von radial außen nach radial innen betrachtet etwa S-förmig gebogen.

In seinem Zentrum weist der Gehäusedeckel 28 eine koaxiale Montageöffnung 42 für den Verbindungsnippel 16 auf. Eine radial innere, die Montageöffnung 42 umgebende Umfangswand des Gehäusedeckels 28 ist mit einem Innengewinde 44 ausgestattet. Das Innengewinde 44 passt zu einem entsprechenden Außengewinde 46 an der radial äußeren Umfangsseite des Verbindungsnippels 16.

Radial außerhalb der Montageöffnung 42 weist der Gehäusedeckel 28 zwei jeweils durchgängige Ölablasslöcher 48 auf. Die Ölablasslöcher 48 sind bezüglich der Montageachse 30 auf radial gegenüberliegenden Seiten angeordnet. Ihre Achsen verlaufen parallel zur Montageachse 30. Die Ölablasslöcher 48 sind mittels einem kreiszylindrischen, koaxialen Stegabschnitt 50 materialtechnisch getrennt von der Montageöffnung 42.

Entlang einer gedachten koaxialen Kreislinie, welche die beiden Ölablasslöcher 48 umgibt, ist eine Mehrzahl von durchgängigen Lufteinlasslöchern 52 angeordnet. Die Lufteinlasslöcher 52 sind jeweils an ihren radial äußeren Umfangsseiten abgeflacht. Gedachte Achsen der Lufteinlasslöcher 52 verlaufen parallel zur Montageachse 30. In den Figuren 1 und 2 sind zwei der Lufteinlasslöcher 52 lediglich gestrichelt angedeutet, da sie sich außerhalb der jeweiligen Schnittebenen befinden und daher eigentlich verdeckt sind.

Auf der dem Filterelement 20 abgewandten Außenseite ist ein Befestigungsabschnitt 54 einer ringförmigen koaxialen Ölablass-Dichtung 56 an dem Gehäusedeckel 28 befestigt. Die Ölablass-Dichtung 56 dient als gehäuseseitiges Ölauslass-Dichtungsteil. Sie ist im Detail in den Figuren 5 und 6 gezeigt. Die Ölablass-Dichtung 56 ist einstückig. Sie ist aus einem elastischen, ölbeständigen Material, beispielsweise Fluorkautschuk (FKM).

Der Befestigungsabschnitt 54 hat die Form einer koaxialen Kreisringscheibe. An seiner radial äußeren Umfangsseite geht der Befestigungsabschnitt 54 einstückig in einen koaxialen ringförmigen Dichtungsabschnitt 58 der Ölablass-Dichtung 56 über.

Auf der dem Dichtungsabschnitt 58 axial gegenüberliegenden Seite des Befestigungsabschnitts 54 sind zwei Befestigungsnippel 60 angeordnet. Die Befestigungsnippel 60 sind einstückig mit dem Befestigungsabschnitt 54 verbunden. Die Befestigungsnippel 60 befinden sich auf bezüglich der Montageachse 30 radial gegenüberliegenden Seiten. Jeweilige Achsen der Befestigungsnippel 60 verlaufen parallel zur Montageachse 30. Ein Abstand zwischen den beiden Befestigungsnippel 60 entspricht einem Abstand zwischen den Ölablasslöchern 48 des Gehausedeckels 28. Die Ölablasslöcher 48 sind zur Verbindung mit den Befestigungsnippel 60 ausgestaltet. Die Befestigungsnippel 60 stecken jeweils in einem der Ölablasslöcher 48. Die Ölablass-Dichtung 56 ist in die Ölablasslöcher 48 des Gehäusedeckels 28 eingeknüpft. Die Befestigungsnippel 62 halten die Ölablass-Dichtung 56 am Gehäusedeckel 28. An ihren freien Enden weisen die Befestigungsnippel 60 jeweils eine Rastnase 62 auf. Mit den Rastnasen 62 verrasten die Befestigungsnippel 60 jeweils hinter den Ölablasslöchern 48. Die Befestigungsnippel 60 sind hohl und bilden so jeweils einen Ölkanal.
Der Dichtungsabschnitt 58 weist, wie in der Figur 6 gezeigt, einen konvexkonkaven Querschnitt auf. Die konkave Seite befindet sich radial innen. Der Dichtungsabschnitt 58 bildet im Bereich seines freien Randes, der dem Gehäusedeckel 28 axial abgewandt ist, an der radial inneren Umfangsseite eine radial innere Dichtungsfläche 66. Die radial innere Dichtungsfläche 66 befindet sich auf der konkaven Seite des konvexkonkaven Dichtungsabschnitts 58. Die radial innere Dichtungsfläche 66 verläuft umfangsmäßig zusammenhängend. Die radial innere Dichtungsfläche 66 ist nach radial innen gerichtet und nach radial innen dichtend wirkend. Die radial innere Dichtungsfläche 66 ist wie gezeigt in einer beispielhaft bevorzugten Ausführungsform in Form eines Wulstes ausgebildet, d. h. die radial innere Dichtungsfläche 66 bildet einen lokal bevorzugt konvex nach innen ragenden Bereich des Dichtungsabschnitts 58. Die radial innere Dichtungsfläche 66 ist bevorzugt im Bereich des freien Randes, der dem Gehäusedeckel 28 axial abgewandt ist, angeordnet, Durch die Anordnung, bei welcher die Dichtfläche radial nach innen vorsteht, wird erreicht, dass eine Anlage des Dichtungsabschnittes 58 an einer zylindrischen verbindungsseitigen Dichtfläche 68 nur im Bereich der radial innere Dichtungsfläche 66 erfolgt und nicht im daran anschließenden, konkaven Bereich. Die Dichtungsfläche 66 weist bevorzugt, in der oben beschriebenen Ausführung durch die konvexe Form realisiert, eine Einführschräge in Richtung des freien Randes, der dem Gehäusedeckel 28 axial abgewandt ist, auf. Diese erleichtert die Montage. Die Ölablass-Dichtung 56, insbesondere der Dichtungsabschnitt 58 bzw. die Dichtfläche 66, sind so ausgelegt, dass bei der Montage die Ölablass-Dichtung 56 radial nach außen elastisch aufgeweitet wird, so dass die zum Erreichen der Dichtheit notwendige Anpresskraft maßgeblich durch die elastische Aufweitung entsteht. Maßgeblich insoweit, als im Betrieb eine weitere, im Betrieb vorteilhafte aber nicht unbedingt notwendige Unterstützung durch die an der Ölablass-Dichtung 56 anliegenden Druckdifferenzen entstehen kann. Dadurch sind keine weiteren Versteifungen oder Stützabschnitte erforderlich.

Bei montiertem Luftentölelement 12 liegt die radial innere Dichtungsfläche 66, wie in den Figuren 1 und 2 gezeigt, an einer umfangsmaßigen verbindungsseitigen Dichtfläche 68 radial dichtend an. Die verbindungsseitige Dichtfläche 68 hat die Form eines koaxialen Kreiszylindermantels. Die verbindungsseitige Dichtfläche 68 ist an einer koaxialen, radial innen gelegenen Umfangsseite einer Stufe eines koaxialen Ringkragens 70 des Verbindungsmittels 16 realisiert. Die verbindungsseitige Dichtfläche 68 ist nach radial außen gerichtet.

Der Ringkragen 70 ist umfangsmäßig an der radial äußeren Umfangsseite des Verbindungsnippels 16 angeordnet. Die Stufe des Ringkragens 70 bildet neben der verbindungsseitigen Dichtfläche 68 eine zum Gehäusedeckel 28 gerichtete axiale Anschlagfläche in Form einer Ringscheibe. An der Anschlagfläche kann der freie Rand des Dichtungsabschnitts 58 anliegen.

Radial innerhalb der verbindungsseitigen Dichtfläche 68 führen mehrere verbindungsseitige Öldurchlassöffnung 72 durch den Ringkragen 70. Jeweilige Achsen der Öldurchlassöffnung 72 verlaufen parallel zur Montageachse 30. Die verbindungsseitigen Öldurchlassöffnungen 72 verbinden bei montierter Luftentölvorrichtung 10 einen Ringspalt zwischen dem Befestigungsabschnitt 54 und dem Ringkragen 70 mit einem Ölablasskanal 73 des Anschlusskopfs 14.
Auf der dem Außengewinde 46 axial gegenüberliegenden Seite des Ringkragens 70 weist der Verbindungsnippel 16 an seiner radial äußeren Umfangsseite ein Anschluss-Außengewinde 74 auf, mit dem der Verbindungsnippel 16 in ein entsprechendes anschlussseitiges Innengewinde des Anschlusskopfs 14 geschraubt ist.

Der Haltering 76, der beispielsweise aus Blech in radialer Richtung mehrfach gebogen ist, ist mit der Bördelverbindung 38 radial außen mit dem Gehäusetopf 26 verbunden. Der Haltering 76 halt den Gehausedeckel 28 an dessen Außenseite. An seinem radial inneren Rand verfügt der Haltering 76 über mehrere Haltelaschen 78, welche jeweils durch eines der Lufteinlasslöcher 52 des Gehäusedeckels 28 ragen und auf dessen Innenseite umgebogen sind. Mit den Haltelaschen 78 wird der Gehäusedeckel 28 an dem Haltering 76 gehalten.

Ferner umfasst der Haltering 76 radial innerhalb der Bördelverbindung 38 eine koaxiale ringförmige, umfangsmäßig zusammenhängende Dichtungsnut, in der eine koaxiale Umgebungsringdichtung 80 angeordnet ist. Die Umgebungsringdichtung 80 umgibt die Lufteinlasslöcher 52 radial außen. Die Umgebungsringdichtung 80 liegt bei montiertem Luftentölelement 12 axial dichtend an einer entsprechenden, in der Figur 1 gezeigten, anschlussseitigen ringförmigen koaxialen Umgebungsdichtfläche 81 des Anschlusskopfs 14 an. Die Umgebungsdichtfläche 81 erstreckt sich umfangsmäßig und radial. Sie dichtet die Lufteinlasslöcher 52, also die Rohluftseite, zur Umgebung hin ab.

Die Montageöffnung 42 des Gehäusedeckels 28 definiert ferner eine Luftauslassöffnung 82. Durch die Luftauslassöffnung 82 erstreckt sich der Innenraum des Verbindungsnippels 16, der somit in montiertem Zustand den Verlauf der Luftauslassöffnung 82 mit definiert. Der Innenraum des Verbindungsnippels 16 bildet oder begrenzt sozusagen den effektiven Durchströmquerschnitt der Luftauslassöffnung 82.

Beim Betrieb der Luftentölvorrichtung 10 strömt Luft, die mit Öltröpfchen beladen sein kann, von der Lufteinlassleitung 83 des Anschlusskopfs 14 durch die Lufteinlasslöcher 52, in der Figur 1 angedeutet durch einen Pfeil 84, in einen Einlassraum 86 des Gehäuses 18. Der untere Teil des Einlassraums 86 befindet sich im Gehäuse 18 zwischen der unteren Endscheibe 24 und dem Gehäusedeckel 28. Der obere Teil des Einlassraums 86 erstreckt sich als Ringraum umfangsmäßig radial außen um das Filterelement 20.

Die Luft durchströmt das Filtermedium des Filterelements 20 von radial außen nach radial innen, angedeutet durch Pfeile 88, in den Elementinnenraum 34. Die Öltröpfchen setzen sich an der radial inneren Umfangsseite des Filterelements 20 ab und fließen der Schwerkraft folgend, in der Figur 1 angedeutet durch gestrichelte Pfeile 90, nach unten.

Die von Öltröpfchen befreite Luft strömt reinluftseitig durch die zentrale Luftauslassöffnung 82 im Innenraum des Verbindungsnippels 16 aus dem Luftentölelement 12 heraus und gelangt in einen Luftauslasskanal 91 des Anschlusskopfs 14.

Die abgeschiedenen Öltröpfchen gelangen durch die hohlen Befestigungsnippel 60 in die Durchtrittsöffnungen 36 und die Ölablasslöcher 48 des Gehäusedeckels 28 in den Spalt zwischen dem Befestigungsabschnitt 54 und dem Ringkragen 70. Aus dem Spalt gelangt das Öl durch die verbindungsseitige Öldurchlassöffnung 72 in den Ölablasskanal 73 des Anschlusskopfs 14.

Die Ölablass-Dichtung 56 und die verbindungsseitige Dichtfläche 68 bilden eine radial wirkende Ölauslass-Dichteinrichtung 92, welche den Ölauslass mit den Ölablasslöcher 48 von der Rohluftseite, nämlich dem Lufteinlass mit den Lufteinlasslöchern 52, trennt. Der Dichtungsabschnitt 58 ist auf seiner der radial inneren Dichtungsfläche 66 abgewandten radial äußeren Umfangsseite nicht durch Abstützmittel radial abgestützt. Die radial äußere Umfangsseite des Dichtungsabschnitts 58 ist der Lufteinlassleitung 83 des Anschlusskopfs 14 zugewandt. Beim Betrieb liegt dort ein Luftdruck der eintretenden Luft an und erhöht so einen Anpressdruck der radial inneren Dichtungsfläche 66 gegen die verbindungsseitige Dichtfläche 68.

Die Montage der Luftentölvorrichtung 10 kann in unterschiedlicher Weise erfolgen.

Nach einer ersten beispielhaften Methode kann der Verbindungsnippel 16 zunächst in die Montageöffnung 42 des Gehäusedeckels 28 geschraubt werden. Dabei gleitet die radial innere Dichtungsfläche 66 außen an der verbindungsseitigen Dichtfläche 68 entlang, bis sie ihre Endposition erreicht hat. Das Luftentölelement 12 kann auf diese Weise mit dem Verbindungsnippel 16 vormontiert werden. Anschließend kann das Luftentölelement 12 mit dem freien Ende des Verbindungsnippels 16 voran axial in das entsprechende Innengewinde des Anschlusskopfs 14 geschraubt werden. Die Umgebungsringdichtung 80 wird axial zwischen dem Gehäusedeckel 28 und der anschlussseitigen Umgebungsringdichtfläche 81 axial dichtend eingepresst. Die Umgebungsringdichtung 80 bildet mit der Umgebungsringdichtfläche 81 eine Umgebungsdichteinrichtung 94.

Nach einer zweiten beispielhaften Methode kann der Verbindungsnippel 16 zunächst in das entsprechende Innengewinde des Anschlusskopfs 14 geschraubt werden. Anschließend kann das Luftentölelement 12 mit dem Gehäusedeckel 28 voran koaxial zur Montageachse 30 auf den Verbindungsnippel 16 geschraubt werden. Dabei werden automatisch die Ölauslass-Dichteinrichtung 92 und die Umgebungsdichteinrichtung 94 jeweils aktiviert.

Zum Entfernen wird das Luftentölelement 12 entweder von dem Verbindungsnippel 16 bezüglich der Montageachse 30 abgeschraubt oder das Luftfilterelement 12 wird mit dem Verbindungsnippel 16 zusammen vom Anschlusskopfs 14 abgeschraubt.

## Patentansprüche

1. Gehäuse (18) einer Einrichtung (12) zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, wobei das Gehäuse topfförmig ist und an einer Stirnseite mit einem Gehäusedeckel (28) verschlossen ist, der Gehäusedeckel (28) mit wenigstens einem ersten Gasdurchlass (82), der bezüglich einer Achse (30) zentral angeordnet ist, mit wenigstens einem zweiten Gasdurchlass (52), der bezüglich der Achse (30) radial außerhalb des wenigstens einen ersten Gasdurchlasses (82) angeordnet ist, und mit wenigstens einem Fluidauslass (36, 48, 60) für von dem Gas abgeschiedenes Fluid, der bezüglich der Achse (30) radial zwischen dem wenigstens einen ersten Gasdurchlass (82) und dem wenigstens einen zweiten Gasdurchlass (52) angeordnet ist, wobei fluidtechnisch zwischen dem wenigstens einen zweiten Gasdurchlass (52) und dem wenigstens einen Fluidauslass (36, 48, 60) wenigstens ein gehäuseseitiges Fluidauslass-Dichtungsteil (56) wenigstens einer Fluidauslass-Dichteinrichtung (92) angeordnet ist, das mit wenigstens einem entsprechenden verbindungsseitigen Fluidauslass-Dichtungsteil (68) eines Verbindungsteils (16), das zur Verbindung des Gehäuses (18) mit der Anschlusseinrichtung (14) vorgesehen ist, dichtend zusammenwirken kann, wobei das gehäuseseitige Fluidauslass-Dichtungsteil (56) wenigstens einen ringförmigen Dichtungsabschnitt (58) mit wenigstens einer wenigstens nach radial innen wirkenden Dichtungsfläche (66) und/oder mit wenigstens einer wenigstens nach radial außen wirkenden Dichtungsfläche und wenigstens einen Befestigungsabschnitt (54) aufweist, mit dem es an dem Gehäusedeckel (28) befestigt ist, **dadurch gekennzeichnet, dass** wenigstens ein Befestigungsabschnitt (54) wenigstens einen hohlen Befestigungsnippel (60) aufweist, der in den wenigstens einen Fluidauslass (36, 48, 60) eingesteckt ist, wobei der hohle Innenraum des Befestigungsnippels (60) als Fluidkanal dient.

2. Gehäuse nach Anspruch 1, **dadurch gekennzeichnet, dass** bezüglich der Achse (30) radial außerhalb wenigstens eines gehäuseseitigen Fluidauslass-Dichtungsteils (56) wenigstens im Bereich einer radial inneren Dichtungsfläche (66) kein Abstützmittel insbesondere des Gehäuses (18) und/oder der Anschlusseinrichtung (14) und/oder des Verbindungsteils (16) zum radialen Abstützen des wenigstens einen gehäuseseitigen Fluidauslass-Dichtungsteils (56) vorgesehen ist.

3. Gehäuse nach Anspruch 1 oder 2, **dadurch gekennzeichnet, dass** wenigstens ein ringförmiger Dichtungsabschnitt (58) wenigstens abschnittsweise einen konvexkonkaven Querschnitt aufweist.

4. Gehäuse nach einem der vorigen Ansprüche, **dadurch gekennzeichnet, dass** wenigstens ein Fluidauslass (48) zur Verbindung mit wenigstens einem Befestigungsabschnitt (54) wenigstens eines gehäuseseitigen Fluidauslass-Dichtungsteils (56) ausgestaltet ist.

5. Gehäuse nach einem der vorigen Ansprüche, **dadurch gekennzeichnet, dass** wenigstens ein verbindungsseitiges Fluidauslass-Dichtungsteil an seiner bezüglich der Achse (30) radial äußeren Umfangsseite wenigstens eine Stufe aufweist, deren radial innen gelegene Umfangsseite eine nach radial außen gerichtete verbindungsseitige Dichtfläche (68) aufweist zum Zusammenwirken mit wenigstens einer nach radial innen wirkenden Dichtungsfläche (66) wenigstens eines gehäuseseitigen Fluidauslass-Dichtungsteils (56).

6. Gehäuse nach einem der vorigen Ansprüche, **dadurch gekennzeichnet, dass** wenigstens ein erster Gasdurchlass (82) eine Montageöffnung (42) für wenigstens ein Verbindungsteil (16) aufweist.

7. Einrichtung (12) zur Abscheidung wenigstens eines Fluids, insbesondere Öl, aus Gas, insbesondere Luft, insbesondere eines Kompressors, einer Druckluftanlage oder einer Vakuumpumpe, mit einem Gehäuse (18) nach einem der vorhergehenden Ansprüche und einem Verbindungsteil (16) zur Verbindung des Gehäuses (18) mit einer Anschlusseinrichtung (14), das Verbindungsteil (16) aufweisend wenigstens einen gasleitenden Raum für wenigstens einen ersten Gasdurchlass (82) eines Gehäuses (18) der Einrichtung (12), wobei das Verbindungsteil (16) wenigstens einen Fluiddurchlass (72) aufweist oder zumindest mit bildet für wenigstens einen Fluidauslass (36, 48, 60) des Gehäuses (18) für von dem Gas abgeschiedenes Fluid, der außerhalb des wenigstens einen gasleitenden Raums angeordnet ist, wobei auf einer dem gasleitenden Raum abgewandten Seite des wenigstens einen Fluidauslasses (72) wenigstens ein verbindungsseitiges Fluidauslass-Dichtungsteil (68) wenigstens einer Fluidauslass-Dichteinrichtung (92) angeordnet ist, das mit dem entsprechenden gehäuseseitigen Fluidauslass-Dichtungsteil (56) dichtend zusammenwirkt, und mit wenigstens einem Filter- und/oder Abscheideelement (20), das in dem Gehäuse (18) so angeordnet ist, dass es wenigstens einen ersten Gasdurchlass (82) und wenigstens einen zweiten Gasdurchlass (52) trennt.

8. Vorrichtung (10) zur Abscheidung wenigstens eines Fluids, insbesondere Öl, aus Gas, insbesondere Luft, insbesondere eine Luftentölbox oder ein Luftentölelement, insbesondere eines Kompressors, einer Druckluftanlage oder einer Vakuumpumpe, mit wenigstens einer Anschlusseinrichtung (14), mit der wenigstens eine Einrichtung (12) nach Anspruch 7 verbunden ist.

## Claims

1. Housing (18) of a means (12) for separating at least one fluid, in particular oil, from gas, in particular air, in particular of an air de-oiling box or of an air de-oiling element, in particular of a compressor, of a compressed air system or of a vacuum pump, wherein the housing is pot-shaped and closed on a front face by means of a housing cover (28), the housing cover (28) having at least one first gas passage (82) which is disposed centrally with respect to an axis (30), having at least one second gas passage (52) which is disposed radially outside the at least one first gas passage (82) with respect to the axis (30), and having at least one fluid outlet (36, 48, 60) for fluid separated from the gas which is disposed radially with respect to the axis (30) between the at least one first gas passage (82) and the at least one second gas passage (52), wherein between the at least one second gas passage (52) and the at least one fluid outlet (36, 48, 60) at least one housing-sided fluid outlet sealing element (56) of at least one fluid outlet sealing device (92) is disposed fluidically, the fluid outlet sealing element being capable to sealingly interact with at least one corresponding connection-sided fluid outlet sealing element (68) of a connecting part (16), which is provided for connecting the housing (18) to the connecting means (14), wherein the housing-sided fluid outlet sealing element (56) features at least one annular sealing portion (58) having at least one at least radially inwardly acting sealing surface (66) and/or having at least one at least radially outwardly acting sealing surface and at least one attachment portion (54) with which it is attached to the housing cover (28), **characterized in that** at least one attachment portion (54) features at least one hollow attachment nipple (60) which is inserted into the at least one fluid outlet (36, 48, 60), wherein the hollow interior area of the attachment nipple (60) serves as fluid channel.

2. Housing according to claim 1, **characterized in that** with respect to the axis (30), radially outside at least of one housing-sided fluid outlet sealing element (56), at least in the area of a radially inner sealing surface (66), no support means in particular of the housing (18) and/or the connecting means (14) and/or the connecting part (16) for radially supporting the at least one housing-sided fluid outlet sealing element (56) is provided.

3. Housing according to claim 1 or 2, **characterized in that** at least one annular sealing portion (58) features at least sectionwise one convex-concave cross section.

4. Housing according to one of the preceding claims, **characterized in that** at least one fluid outlet (48) is designed for connection to at least one attachment portion (54) of at least one housing-sided fluid outlet sealing element (56).

5. Housing according to one of the preceding claims, **characterized in that** at least one connection-sided fluid outlet sealing element features at least one step on its radially outer circumferential side with respect to the axis (30), the radially inner circumferential side of which features a radially outwardly directed connection-sided sealing surface (68) for interacting with at least one radially inwardly acting sealing surface (66) of at least one housing-sided fluid outlet sealing element (56).

6. Housing according to one of the preceding claims, **characterized in that** at least one first gas passage (82) features an assembly opening (42) for at least one connecting part (16).

7. Means (12) for separating at least one fluid, in particular oil, from gas, in particular air, in particular of a compressor, of a compressed air system or of a vacuum pump, having a housing (18) according to one of the preceding claims and a connecting part (16) for the housing (18) to the connecting means (14), the connecting part (16) featuring at least one gas-conducting chamber for at least one first gas passage (82) of a housing (18) of the means (12), wherein the connecting part (16) features or at least contributes to form at least one fluid passage (72) for at least one fluid outlet (36, 48, 60) of the housing (18) for fluid separated from the gas, the fluid passage being disposed outside the at least one gas-conducting chamber, wherein on a side facing away from the gas-conducting chamber of the at least one fluid outlet (72) is disposed at least one connection-sided fluid outlet sealing element (68) of at least one fluid outlet sealing device (92), the fluid outlet sealing element interacting sealingly with the corresponding housing-sided fluid outlet sealing element (56), and having at least one filter element and/or separating element (20) which is disposed in the housing (18) in such a way that it separates at least one first gas passage (82) and at least one second gas passage (52).

8. Apparatus (10) for separating at least one fluid, in particular oil, from gas, in particular air, in particular of an air de-oiling box or of an air de-oiling element, in particular of a compressor, of a compressed air system or of a vacuum pump, having at least one connecting means (14) to which at least one means (12) according to claim 7 is connected.

## Revendications

1. Boîtier (18) d'un dispositif (12) de séparation d'au moins un fluide, notamment d'huile, de gaz, notamment d'air, notamment d'un boîtier de déshuilage d'air ou d'un élément de déshuilage d'air, notamment d'un compresseur, d'un dispositif à air comprimé ou d'une pompe à vide, le boîtier étant exécuté en forme de pot et fermé au moyen d'un couvercle de boîtier (28) sur une face frontale, le couvercle de boîtier (28) ayant au moins un premier passage de gaz (82) qui est disposé de manière centrée par rapport à un axe (30), ayant au moins un second passage de gaz (52) qui est disposé de manière radiale par rapport à l'axe (30) en dehors du premier passage de gaz (82), au moins au nombre d'un, et ayant au moins une sortie de fluide (36, 48, 60) pour le fluide séparé du gaz, cette sortie étant disposée de manière radiale par rapport à l'axe (30) entre le premier passage de gaz (82), au moins au nombre d'un, et le second passage de gaz (52), au moins au nombre d'un, au moins un élément d'étanchéité de sortie de fluide (56) côté boîtier d'au moins un dispositif d'étanchéité de sortie de fluide (92) étant disposé fluidiquement entre un second passage de gaz (52), au moins au nombre d'un, et la sortie de fluide (36, 48, 60), au moins au nombre d'une, cet élément d'étanchéité pouvant interagir avec un effet étanchant avec au moins un élément d'étanchéité de sortie de fluide (68) côté jonction correspondant d'une pièce de raccordement (16) prévue pour le raccordement du boîtier (18) au dispositif de raccordement (14), l'élément d'étanchéité de sortie de fluide (56) côté boîtier présentant au moins une section d'étanchéité (58) annulaire ayant au moins une surface d'étanchéité (66) agissant au moins vers l'intérieur en sens radial et/ou ayant au moins une surface d'étanchéité agissant au moins vers l'extérieur en sens radial et au moins une section de fixation (54) au moyen de laquelle il est fixé au couvercle de boîtier (28), **caractérisé en ce qu'**au moins une section de fixation (54) présente au moins un raccord de fixation creux (60) qui est inséré dans la sortie de fluide (36, 48, 60), au moins au nombre d'une, l'espace intérieur creux du raccord de fixation (60) faisant office de canal de fluide.

2. Boîtier selon la revendication 1, **caractérisé en ce que** par rapport à l'axe (30), radialement à l'extérieur de l'élément d'étanchéité de sortie de fluide (56) côté boîtier, au moins au nombre d'un, au moins dans la zone d'une surface d'étanchéité (66) radialement intérieure, aucun moyen de support, notamment du boîtier (18) et/ou du dispositif de raccordement (14) et/ou de la pièce de raccordement (16), n'est prévu pour soutenir radialement l'élément d'étanchéité de sortie de fluide (56) côté boîtier, au moins au nombre d'un.

3. Boîtier selon la revendication 1 ou 2, **caractérisé en ce qu'**au moins une section d'étanchéité annulaire (58) présente, au moins en partie, une section convexoconcave.

4. Boîtier selon l'une des revendications précédentes, **caractérisé en ce qu'**au moins une sortie de fluide (48) est exécutée en tant que jonction à au moins une section de fixation (54) d'au moins un élément d'étanchéité de sortie de fluide (56) côté boîtier.

5. Boîtier selon l'une des revendications précédentes, **caractérisé en ce qu'**au moins un élément d'étanchéité de sortie de fluide côté jonction présente sur sa face circonférentielle extérieure en sens radial par rapport à l'axe (30) au moins une partie étagée dont la face circonférentielle intérieure en sens radial présente une surface d'étanchéité (68) côté jonction dirigée vers l'extérieur en sens radial, cette surface étant destinée à interagir avec au moins une surface d'étanchéité (66) agissant vers l'intérieur en sens radial d'au moins un élément d'étanchéité de sortie de fluide (56) côté boîtier.

6. Boîtier selon l'une des revendications précédentes, **caractérisé en ce qu'**au moins un premier passage de gaz (82) présente une ouverture de montage (42) pour au moins une pièce de raccordement (16).

7. Dispositif (12) destiné à la séparation d'au moins un fluide, notamment d'huile, de gaz, notamment d'air, notamment d'un compresseur, d'un dispositif à air comprimé ou d'une pompe à vide, ayant un boîtier (18) selon l'une des revendications précédentes et une pièce de raccordement (16) permettant de relier le boîtier (18) à un dispositif de raccordement (14), la pièce de raccordement (16) présentant au moins un espace acheminant le gaz pour au moins un premier passage de gaz (82) d'un boîtier (18) du dispositif (12), la pièce de raccordement (16) présentant au moins un passage de fluide (72) ou contribuant au moins à former un tel passage pour au moins une sortie de fluide (36, 48, 60) du boîtier (18) pour le fluide séparé du gaz, ce passage étant disposé en dehors de l'espace, au moins au nombre d'un, acheminant le gaz, au moins un élément d'étanchéité de sortie de fluide (68) côté jonction d'au moins un dispositif d'étanchéité de sortie de fluide (92) étant disposé d'un côté opposé à l'espace acheminant le gaz de la sortie de fluide (72), au moins au nombre d'une, cet élément interagissant avec un effet étanchant avec l'élément d'étanchéité de sortie de fluide (56) côté boîtier correspondant, et ayant au moins un élément de filtre et/ou un élément séparateur (20) qui est placé dans le boîtier (18) de manière à ce qu'il sépare au moins un premier passage de gaz (82) et au moins un second passage de gaz (52).

8. Dispositif (10) destiné à la séparation d'au moins un fluide, notamment d'huile, de gaz, notamment d'air, notamment d'un boîtier de déshuilage d'air ou d'un élément de déshuilage d'air, notamment d'un compresseur, d'un dispositif à air comprimé ou d'une pompe à vide, ayant au moins un dispositif de raccordement (14) auquel est relié au moins un dispositif (12) selon la revendication 7.
